# FASCICULE DE BREVET EUROPEEN

(11) **EP 2 601 871 B1**
(45) Date de publication et mention de la délivrance du brevet: **23.04.2014**
(21) Numéro de dépôt: 12290425.3
(22) Date de dépôt: 03.12.2012
(51) Int. Cl.: A47J 45/07

(54) **Poignée amovible et ustensile de cuisine adapté à cette poignée**
Abnehmbarer Griff und Kochutensil für einen solchen Griff
Removable handle and cooking utensil adapted for such handle

(30) Priorité: 09.12.2011 FR 1103787
(43) Date de publication de la demande: 12.06.2013
(73) Titulaire: ARC INTERNATIONAL COOKWARE SAS, 36000 Chateauroux (FR)
(72) Inventeur: Lepage, Francis, 69380 Dommartin (FR)
(74) Mandataire: Bezault, Jean

(56) Documents cités:
- WO-A1-2009/123473
- FR-A1- 2 893 494
- RO-A2- 126 365
- US-A1- 2005 015 933

## Description

L'invention se rapporte aux ustensiles de cuisine, tels que les casseroles, poêles et articles analogues.

Elle concerne plus particulièrement une poignée amovible destinée à un ustensile de cuisine, et l'ustensile de cuisine adapté pour recevoir cette poignée.

On connaît déjà différents types de poignées amovibles servant à la préhension d'ustensiles de cuisines, tels que des récipients ou analogues.

La plupart des poignées amovibles connues comportent des moyens mécaniques de verrouillage et de déverrouillage de la poignée agissant soit sur l'ustensile lui-même, par exemple sur le bord d'une casserole ou analogue, soit encore sur une embase solidaire de l'ustensile. Cette embase peut être soit réalisée d'une seule pièce avec l'ustensile, soit rapportée sur ce dernier.

De telles poignées peuvent utiliser, par exemple, des moyens de pincement coopérant avec une partie de l'ustensile ou des moyens d'accrochage fonctionnant par coopération de forme entre la poignée et l'ustensile de cuisson. On peut se référer par exemple à FR 2 758 074 et FR 2 898 032.

La plupart des poignées connues nécessitent une combinaison de mouvements avec pivotement pour assurer aussi bien la solidarisation de la poignée à l'ustensile que la désolidarisation de la poignée et de l'ustensile.

Il existe aussi des poignées amovibles utilisant des moyens magnétiques, comme enseigné par EP 1 415 581 A2 ou encore des moyens magnétiques en complément de moyens mécaniques, comme enseigné par FR 2 220 767 A1.

Toutefois, ces moyens magnétiques ne permettent pas d'assurer un verrouillage satisfaisant en toute sécurité.

L'invention a notamment pour but de surmonter les inconvénients des poignées amovibles connues.

Elle vise notamment à procurer une poignée amovible susceptible d'assurer un verrouillage et un déverrouillage aisés et en toute sécurité.

L'invention vise encore à procurer une poignée amovible dont l'utilisation est confortable pour l'utilisateur et dont le mouvement d'approche vers l'ustensile ou d'éloignement de l'ustensile ne nécessite pas une combinaison de mouvements.

A cet effet l'invention propose une poignée amovible pour ustensile de cuisine, apte à coopérer avec une embase de l'ustensile.

Conformément à l'invention, la poignée loge un aimant mobile apte à être entraîné en rotation autour d'un axe de rotation s'étendant sensiblement dans la direction longitudinale de la poignée, les pôles de l'aimant mobile étant disposés radialement de part et d'autre de l'axe de rotation, l'aimant mobile étant prévu pour coopérer avec un aimant fixe porté par l'embase, et un mécanisme d'entraînement apte à entraîner l'aimant mobile de l'une à l'autre de deux positions comprenant une position de verrouillage dans laquelle les pôles de l'aimant mobile et les pôles de l'aimant fixe s'attirent et une position de déverrouillage dans laquelle les pôles de l'aimant mobile et les pôles de l'aimant fixe se repoussent, ainsi qu'un crochet de verrouillage actionné au moins en partie par la rotation de l'aimant mobile et apte à être placé dans l'une ou l'autre de deux positions comprenant une position de verrouillage dans laquelle le crochet de verrouillage est prévu pour s'engager dans l'embase et une position de déverrouillage dans laquelle le crochet de verrouillage est prévu pour se dégager de l'embase.

Ainsi, la poignée amovible de l'invention utilise en combinaison des moyens magnétiques, à savoir un aimant mobile logé dans la poignée et un aimant fixe logé dans l'embase de l'ustensile, aptes à coopérer entre eux, et des moyens mécaniques comportant un crochet de verrouillage.

L'aimant mobile est déplaçable entre une position de verrouillage dans laquelle les pôles de l'aimant mobile et les pôles de l'aimant fixe s'attirent, ce qui permet d'assurer un positionnement correct relatif de la poignée et de l'embase. Par ailleurs, dans cette position de verrouillage, le crochet de verrouillage vient s'engager dans l'embase, ce qui procure un verrouillage mécanique, si bien que la poignée et l'embase sont fermement reliées entre elles en toute sécurité.

Pour assurer le déverrouillage, donc la désolidarisation de la poignée et de l'embase de l'ustensile, l'aimant mobile est entraîné en rotation pour l'amener dans une position de déverrouillage dans laquelle les pôles respectifs des deux aimants se repoussent, ce qui favorise la séparation de la poignée et de l'embase et déverrouille en même temps le crochet de verrouillage.

La présence des deux aimants procure en outre une sensation de sécurité à l'utilisateur, spécialement lors du verrouillage, car la poignée est attirée par l'embase jusqu'à une position de butée. L'utilisateur est ainsi rassuré car il ressent et perçoit cette action de butée aussi bien par le toucher que par l'ouïe (bruit de contact).

De même, lors du déverrouillage, l'utilisateur perçoit l'éloignement mutuel de l'embase et de la poignée et simultanément le déverrouillage mécanique.

Au surplus, la poignée amovible permet un emmanchement sur l'embase par un simple mouvement de translation, dans une direction où les deux aimants vont se rapprocher. Il en est de même pour la cinématique inverse, c'est-à-dire pour la séparation de la poignée et de l'embase. Les mouvements de rapprochement et d'éloignement sont ainsi plus instinctifs. Ils peuvent en outre être réalisés d'une seule main.

Dans une forme de réalisation préférée de l'invention, la poignée comprend un corps de forme oblongue logeant l'aimant mobile et le mécanisme d'entraînement, ainsi qu'un prolongement prévu pour prendre appui sous l'embase et logeant le crochet de verrouillage.

Ce prolongement permet de réaliser un bon appui sous l'embase et d'assurer en outre, grâce au crochet de verrouillage, un verrouillage mécanique entre le prolongement de la poignée et l'embase.

Dans une forme de réalisation préférée de l'invention, l'aimant mobile est disposé derrière une paroi frontale de la poignée prévue pour venir en butée contre une paroi frontale de l'embase et se raccordant avec une paroi supérieure du prolongement prévue pour venir en appui sous une paroi inférieure de l'embase, et dans laquelle débouche une cavité logeant le crochet de verrouillage.

Du fait que l'aimant mobile et l'aimant fixe sont disposés derrière des parois frontales respectives de la poignée et de l'embase, ils se trouvent protégés notamment vis-à-vis d'agents extérieurs.

Il n'est cependant pas obligatoire que les deux aimants soient logés chacun derrière une paroi et il est envisageable aussi que les deux aimants soient directement exposés vers l'extérieur, ce qui favorise alors un contact direct entre eux dans la position de verrouillage.

L'aimant mobile est avantageusement porté par un barillet de forme générale cylindrique, monté en rotation dans la poignée et couplé au mécanisme d'entraînement, le barillet formant une came périphérique apte à coopérer avec une butée du crochet de verrouillage pour le déplacer de l'une à l'autre de sa position de verrouillage et de sa position de déverrouillage.

Ainsi, il existe un couplage entre les positions du barillet et de l'aimant mobile, et les positions du crochet de verrouillage.

Idéalement, la rotation de l'aimant mobile entre ses deux positions extrêmes (verrouillage et déverrouillage) devrait être de l'ordre de 180° pour assurer respectivement l'attraction et la répulsion de leurs pôles respectifs.

Toutefois, il s'avère en pratique qu'il suffit que l'aimant mobile puisse tourner sur un intervalle angulaire d'au moins 90° pour se déplacer de l'une à l'autre de sa position de verrouillage et de sa position de déverrouillage. A titre d'exemple, l'intervalle angulaire précité peut être d'environ 120°. Dans la position de verrouillage, on s'assure que les pôles nord et sud de l'aimant mobile soient en vis-à-vis respectivement des pôles sud et nord de l'aimant fixe. Par contre, dans la position de verrouillage, il n'est pas nécessaire que les pôles nord et sud de l'aimant mobile soient strictement en vis-à-vis des pôles nord et sud de l'aimant fixe, ce qui serait le cas avec une rotation de 180°.

Dans une forme de réalisation de l'invention, le crochet de verrouillage est soumis à l'action d'un ressort tendant à déplacer ledit crochet vers la position de verrouillage dans laquelle il fait saillie de la poignée et est prévu pour s'engager dans l'embase, le crochet de verrouillage étant apte à être déplacé vers la position de déverrouillage dans laquelle il est au moins en partie escamoté dans la poignée.

Dans une forme de réalisation avantageuse, le crochet de verrouillage comporte une face inclinée prévue pour coopérer avec l'embase lors de la mise en place de la poignée sur l'embase pour amener le crochet de verrouillage en position de déverrouillage puis en position de verrouillage.

Le mécanisme d'entraînement peut être réalisé de différentes manières. Il comprend avantageusement une tige s'étendant sensiblement dans la direction longitudinale de la poignée et couplée en rotation à l'aimant mobile.

La tige d'entraînement peut être couplée directement à l'aimant mobile. Elle peut aussi être couplée en rotation à l'aimant mobile par l'intermédiaire d'un accouplement universel, en sorte que l'axe de rotation de l'aimant mobile soit incliné angulairement par rapport à l'axe de rotation de la tige.

Dans une forme de réalisation, le mécanisme d'entraînement est couplé à un curseur rappelé vers une première position correspondant à la position de verrouillage de l'aimant mobile et susceptible d'être déplacé manuellement vers une seconde position correspondant à la position de déverrouillage de l'aimant mobile.

Il est avantageux que la poignée soit munie d'au moins une tige de guidage s'étendant sensiblement dans la direction longitudinale de la poignée et prévue pour s'engager dans l'embase afin d'assurer un guidage en translation pour l'emmanchement de la poignée sur l'embase.

Pour cela, on utilise avantageusement deux tiges de guidage parallèles formant une sorte de fourche qui contribue à assurer la sécurité de l'emmanchement de la poignée sur l'embase.

Sous un autre aspect, l'invention concerne un ustensile de cuisine comprenant une embase prévue pour recevoir une poignée amovible telle que définie précédemment.

Conformément à l'invention, cette embase loge un aimant fixe dont les pôles respectifs sont disposés de part et d'autre d'un axe définissant un axe d'emmanchement de la poignée, et l'embase comporte un évidement prévu pour recevoir un crochet de verrouillage de la poignée.

L'invention porte aussi sur un dispositif de préhension comprenant en combinaison une poignée amovible telle que définie ci-dessus et une embase d'un ustensile de cuisine comprenant une embase prévue pour recevoir cette poignée amovible.

Dans la description détaillée qui suit, faite seulement à titre d'exemple, on se réfère aux dessins annexés, sur lesquels :
- la figure 1 est une vue en perspective partielle d'une poignée selon l'invention et d'un ustensile de cuisine muni d'une embase adaptée à la poignée, la poignée étant représentée à distance de l'embase ;
- la figure 2 est une vue en perspective partielle analogue à la figure 1, dans laquelle la poignée est emmanchée complètement sur l'embase ;
- la figure 3 est une vue en perspective de la poignée des figures 1 et 2 dans une autre orientation ;
- la figure 4 est une vue de dessous de la poignée des figures 1 à 3, la partie inférieure de la poignée ayant été enlevée ;
- la figure 5 est une vue en coupe longitudinale correspondant à la figure 4, le plan de coupe passant par le milieu de la poignée ;
- la figure 6 est une vue schématique montrant la coopération entre l'aimant mobile de la poignée et l'aimant fixe de l'embase ;
- la figure 7 est une vue schématique en perspective du barillet et du crochet de verrouillage de la poignée dans la position de verrouillage ; et
- la figure 8 est une vue analogue à la figure 7 dans laquelle le barillet et le crochet de verrouillage sont en position de déverrouillage.

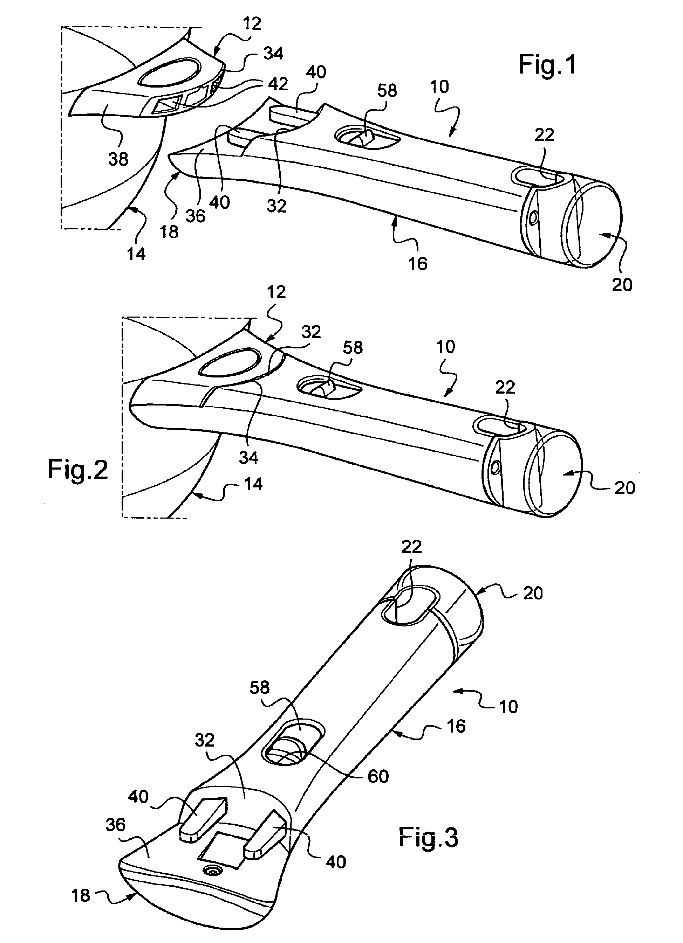

On se réfère d'abord à la figure 1 qui montre une poignée amovible 10 conçue pour coopérer par emboîtement avec une embase 12 solidaire d'un ustensile de cuisine 14, comme par exemple une poêle, une casserole, etc.

L'ustensile de cuisine 14 proprement dit peut être réalisé en différents matériaux, par exemple en acier inoxydable, en verre résistant, en céramique, etc. La solidarisation de l'embase 12 sur l'ustensile proprement dit peut être réalisée par différents moyens, comme on le verra plus loin.

La poignée 10 est amovible et est conçue pour s'emboîter sur l'embase par un simple mouvement d'emmanchement dans une direction de translation qui correspond sensiblement à la direction longitudinale de la poignée, ce qui assure la mise en place et l'enlèvement de la poignée par un simple mouvement linéaire. Le mouvement d'emmanchement et le mouvement inverse peuvent ainsi être effectués d'une seule main.

La figure 2 montre les positions relatives de la poignée et de l'embase en position d'emmanchement ou de verrouillage.

Comme on peut le voir sur les figures 1 à 5, la poignée 10 comprend un corps 16 de forme oblongue réalisé par l'assemblage de pièces moulées en matière plastique. On peut utiliser pour cela différents types de matières plastiques possédant des propriétés de résistance mécanique et de résistance thermique appropriées, y compris des phénoplastes, comme la Bakélite®. Ce corps 16 est doté d'un prolongement 18 prévu pour prendre appui sous l'embase 12. Ce prolongement se situe vers l'extrémité avant de la poignée, son extrémité arrière étant pourvue d'un bouchon d'extrémité 20 qui délimite, conjointement avec le corps 16, un passage traversant 22 pour permettre par exemple l'accrochage de la poignée sur un support approprié.

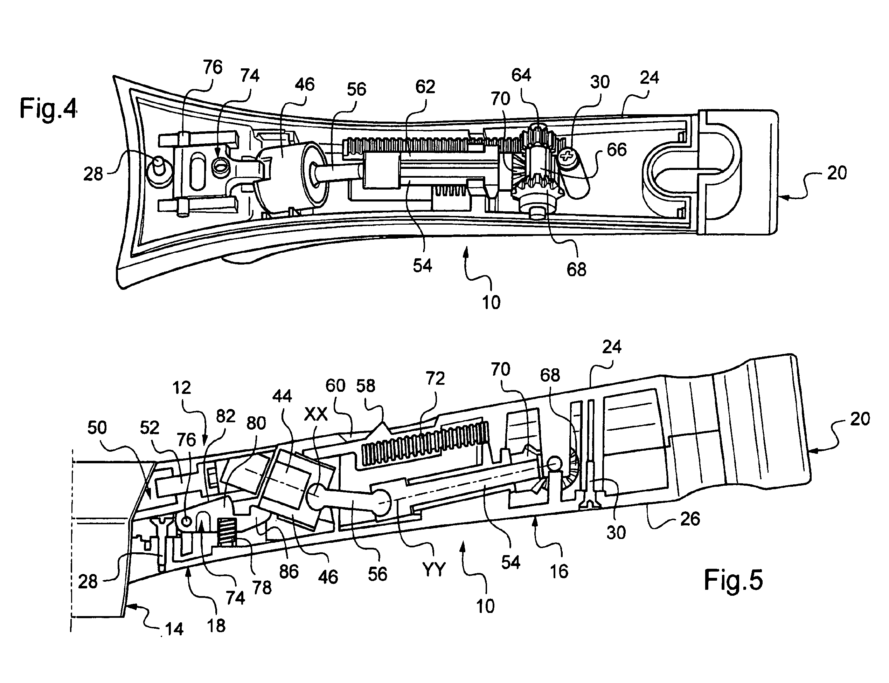

Dans l'exemple, le corps 16 est formé par l'assemblage de deux coquilles moulées, à savoir une coquille supérieure 24 et une coquille inférieure 26 (figure 5). Ces deux coquilles sont fixées entre elles par une vis 28 traversant la coquille supérieure 24 pour s'engager dans la coquille inférieure 26 dans la région du prolongement 18 et une vis 30 traversant la coquille inférieure 26 pour s'engager dans la coquille supérieure 24 dans une région proche du bouchon 20. Ce bouchon est ensuite rapporté, par exemple au moyen d'une vis, à l'extrémité du corps de la poignée.

Le corps 16 de la poignée présente une paroi frontale 32 de forme incurvée, prévue pour venir en butée contre une paroi frontale 34 de l'embase 12 dans la position d'emmanchement de la poignée (figure 2). La paroi frontale 32 se raccorde à une paroi supérieure 36 du prolongement 18 qui est prévue pour venir en appui sous une paroi inférieure 38 de l'embase. Les parois 36 et 38 sont ici réalisées sensiblement planes, mais pourraient présenter une forme différente, par exemple relevée sur les côtés.

La poignée 10 est munie de deux tiges de guidage 40 qui s'étendent parallèlement entre elles et sensiblement dans la direction longitudinale de la poignée et prévues pour s'engager dans l'embase afin d'assurer un guidage en translation pour l'emmanchement de la poignée sur l'embase. Ces deux tiges de guidage 40 (figures 1 et 3) sont logées dans la coquille supérieure 24 et fixées dans cette dernière par tout moyen approprié. Elles traversent la paroi frontale 32 et s'étendent parallèlement à la paroi supérieure 36 du prolongement pour former une fourche. Ces tiges de guidage sont de préférence réalisées en métal, en particulier en acier inoxydable, et sont prévues pour s'engager respectivement dans deux logements 42 (figure 1) de l'embase.

On se réfère maintenant plus particulièrement aux figures 4 et 5 pour décrire les mécanismes internes de la poignée.

La poignée 10 loge un aimant mobile 44 porté par un barillet 46 de forme générale cylindrique circulaire monté en rotation autour d'un axe de rotation XX qui est disposé incliné par rapport à la direction longitudinale de la poignée et notamment par rapport au plan défini par la paroi supérieure 36 du prolongement 18. L'aimant 44 est disposé derrière la paroi frontale 32, réalisée sous la forme d'une paroi de faible épaisseur, les pôles nord et sud (N et S) de l'aimant étant disposés radialement de part et d'autre de l'axe de rotation. Il s'ensuit que les effets de l'aimant 44 peuvent s'exercer au travers de la paroi frontale 32. Toutefois, l'aimant mobile pourrait, en variante, être exposé directement vers l'extérieur comme mentionné plus haut.

Dans l'exemple, la paroi frontale 32 et la paroi supérieure 36 de la poignée forment un angle supérieur à 90°, typiquement de l'ordre de 120°. De même, la paroi frontale 34 forme avec la paroi inférieure 38 de l'embase un angle correspondant supérieur à 90°, typiquement de l'ordre de 120°. L'angle précité pourrait, en variante, avoir une valeur plus faible, par exemple inférieure à 90°.

L'aimant mobile 44 est prévu pour coopérer avec un aimant fixe 48 logé à l'intérieur de l'embase 12 et dont les pôles respectifs nord et sud (N' et S') sont également disposés radialement par rapport à l'axe précité lorsque la poignée est engagée sur l'embase comme le montre la figure 5.

Comme on le voit sur la figure 5, l'embase 12 est fixée sur une saillie 50 de l'ustensile 14 au moyen d'une vis 52 logée intérieurement dans l'embase. L'aimant 48 est placé immédiatement derrière la paroi frontale 34 de l'embase qui est également réalisée avec une faible épaisseur pour que les effets de cet aimant puissent s'exercer au travers de la paroi frontale 34. Là aussi, l'aimant fixe 48 pourrait, en variante, être exposé directement vers l'extérieur, comme indiqué plus haut.

L'aimant mobile 44 peut être entraîné en rotation par un mécanisme d'entraînement, qui sera décrit plus loin, de l'une à l'autre de deux positions comprenant une position de verrouillage et une position de déverrouillage.

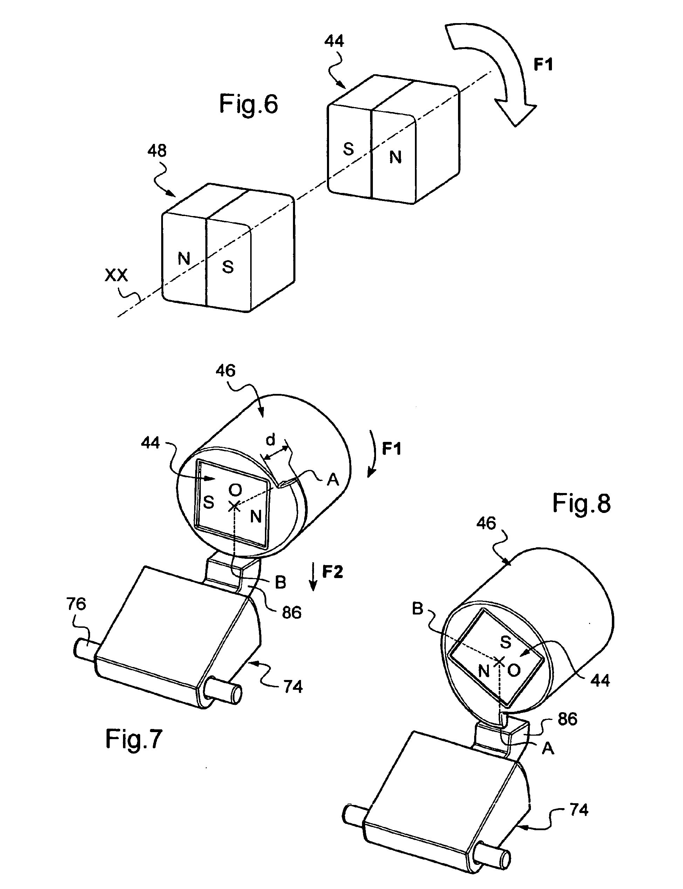

Dans la position de verrouillage, les pôles nord et sud (N et S) de l'aimant mobile 44 et les pôles sud et nord (S' et N') de l'aimant fixe 46 s'attirent respectivement, comme montré schématiquement sur la figure 6.

Dans la position de verrouillage représentée sur la figure 5, les aimants 44 et 48 ne sont séparés entre eux que par l'épaisseur des parois frontales 32 et 34 et peuvent donc s'attirer mutuellement comme on le comprend d'après le schéma de la figure 6.

Sous l'action du mécanisme d'entraînement, l'aimant mobile peut être amené dans une position de déverrouillage dans laquelle les pôles nord et sud (N et S) de l'aimant mobile 44 et les pôles nord et sud (N' et S') de l'aimant fixe 48 se repoussent respectivement. Le passage de la position de verrouillage à la position de déverrouillage s'effectue par une rotation dans le sens de la flèche F₁ comme montré sur la figure 6. Idéalement, l'intervalle de rotation entre les deux positions devrait être de 180° pour arriver à une position de déverrouillage en laquelle les pôles nord N et N' sont en vis-à-vis et les pôles sud S et S' sont en vis-à-vis. En pratique, il s'avère qu'une rotation d'au moins 90°, typiquement de l'ordre de 120°, est suffisante pour permettre la répulsion dans la position de déverrouillage.

Le mécanisme d'entraînement en rotation du barillet 46 et donc de l'aimant 44 comprend une tige 54 (figures 4 et 5) s'étendant sensiblement dans la direction longitudinale de la poignée et couplée en rotation à l'aimant mobile. Dans l'exemple, ce couplage en rotation s'effectue par l'intermédiaire d'un accouplement universel 56, ce qui permet à l'axe de rotation XX de l'aimant mobile d'être incliné angulairement par rapport à l'axe de rotation YY de la tige. Pour déplacer l'aimant 44 de l'une à l'autre de ses deux positions extrêmes, la tige 54 doit être entraînée en rotation sur un intervalle angulaire qui, dans l'exemple, est d'environ 120°.

Dans l'exemple représenté, le mécanisme d'entraînement est couplé à un curseur ou poussoir 58 traversant une lumière 60 ayant la forme d'une ouverture oblongue aménagée en partie supérieure de la poignée, dans la coquille 24. Le curseur 58 est rappelé élastiquement vers une première position (proche de l'extrémité avant de la poignée) correspondant à la position de verrouillage de l'aimant mobile. Le curseur 58 peut être déplacé manuellement, c'est-à-dire vers l'extrémité arrière de la poignée, vers une seconde position correspondant à la position de déverrouillage de l'aimant mobile.

Le mécanisme d'entraînement comprend en outre une crémaillère 62 solidaire du curseur 58, qui engrène avec un pignon droit 64 (figure 4). Ce pignon droit est calé sur un axe 66 qui s'étend perpendiculairement à l'axe longitudinal de la poignée et sur lequel est calé un pignon de renvoi 68 qui engrène avec un autre pignon de renvoi 70 solidaire en rotation de la tige d'entraînement. Ainsi, le déplacement en translation du curseur permet d'entraîner l'aimant 44 en rotation. Le curseur 58 est en outre sollicité par un ressort hélicoïdal 72 vers sa première position ou position de repos.

La poignée loge en outre un crochet de verrouillage 74 (figures 4 et 5) susceptible d'être actionné au moins en partie par la rotation de l'aimant mobile et apte à être placé dans l'une ou l'autre de deux positions comprenant une position de verrouillage dans laquelle le crochet est prévu pour s'engager dans l'embase et une position de déverrouillage dans laquelle le crochet est prévu pour se dégager de l'embase.

Le crochet de verrouillage est réalisé sous la forme d'un élément basculant autour d'un axe 76 (figures 4 et 5). Le crochet de verrouillage 74 est logé dans le prolongement 18 de la poignée et il est soumis à l'action d'un ressort 78 tendant à le déplacer vers la position de verrouillage dans laquelle il fait saillie de la poignée. Le crochet 74 comporte une face inclinée 80 qui fait saillie du plan de la paroi supérieure 36 du prolongement dans la position de verrouillage de manière à s'engager dans un évidement 82 débouchant dans la paroi inférieure 38 de l'embase. Dans la position de verrouillage, le crochet s'engage dans l'encoche et assure ainsi l'immobilisation de la poignée sur l'embase.

Le crochet de verrouillage 74 peut être aussi déplacé vers la position de déverrouillage dans laquelle il est au moins en partie escamoté dans la poignée. Le passage de la position de verrouillage à la position de déverrouillage s'effectue automatiquement par basculement du crochet autour de son axe 76 lorsque la poignée est emmanchée sur l'embase. Pour passer en position de déverrouillage du crochet 74 lors de l'enlèvement de la poignée, il faut exercer un mouvement positif. Celui-ci est réalisé par l'intermédiaire du barillet comme expliqué maintenant en référence aux figures 7 et 8.

Le barillet 46 (figures 7 et 8) présente un contour cylindrique circulaire et forme en outre une came périphérique 84 apte à coopérer avec une butée 86 du crochet de verrouillage pour le déplacer de l'une à l'autre de sa position de verrouillage et de sa position de déverrouillage. Sous l'action du ressort 78, la butée 84 vient en appui sur la came 86. Cette dernière a une forme évolutive et s'étend sur environ 120° entre un demi axe OA et un demi axe OB. Au point A (point haut), la came 84 est à une distance d de la périphérie du barillet, tandis qu'au point B (point bas), elle rejoint la périphérie du barillet. La distance d définit ainsi une course de déplacement de la butée 84 entre deux positions extrêmes.

Dans la position de la figure 7, la butée 84 se trouve dans la partie la plus profonde de la came 86 (point bas B). Au fur et à mesure que le barillet 46 est entraîné en rotation dans le sens de la flèche F₁ (ici le sens horaire), la butée 84 se déplace en translation dans le sens de la flèche F₂ en s'éloignant du centre O du barillet pour aboutir à la position de la figure 8 (point haut A).

Entre la position de la figure 7 (verrouillage) et la position de la figure 8 (déverrouillage), la butée 84 s'est déplacée de la distance d, ce qui permet de basculer et déverrouiller le crochet de verrouillage 74, en comprimant le ressort 78 (figure 5).

Dans la position de la figure 7, qui correspond à celle de la figure 6, les pôles N et S de l'aimant 44 s'attirent respectivement avec les pôles S' et N' de l'aimant 48 et simultanément le crochet de verrouillage est dans sa position de verrouillage.

En revanche, dans la position de la figure 8, le crochet est en position de déverrouillage et les pôles N et S de l'aimant mobile et les pôles N' et S' de l'aimant fixe se repoussent respectivement, bien que n'étant pas strictement en vis-à-vis respectif.

La poignée de l'invention s'utilise de la façon suivante. Pour réaliser son emmanchement sur l'embase, il suffit de l'engager par un simple mouvement de translation en faisant coopérer les faces respectives de la poignée et de l'embase et en engageant aussi les tiges 40 dans les logements 42 de l'embase. Lors de l'engagement, les aimants 44 et 48 s'attirent et en même temps le crochet de déverrouillage bascule pour assurer un verrouillage mécanique dans l'embase. Pour assurer l'enlèvement de la poignée, il suffit d'agir sur le curseur 58, ce qui assure à la fois la rotation de l'aimant mobile 44 afin que les deux aimants se repoussent et le basculement du crochet de verrouillage 74 de la position de verrouillage à la position de déverrouillage.

L'invention n'est pas limitée à la forme de réalisation décrite précédemment à titre d'exemple. Ainsi, par exemple, la tige d'entraînement 54 pourrait être couplée directement à un bouton rotatif placé en extrémité de la poignée. De même, cette tige pourrait être couplée directement au barillet portant l'aimant mobile 44.

Les aimants 44 et 48 ont avantageusement une forme générale de parallélépipède, par exemple une forme cubique, de manière à procurer deux faces planes en vis-à-vis. D'autres formes sont possibles du moment que les deux pôles de l'aimant mobile soient espacés mutuellement dans une direction transversale à l'axe de rotation de l'aimant mobile. Il en est de même pour l'aimant fixe dont les deux pôles doivent être espacés mutuellement dans une direction transversale à l'axe d'emmanchement de la poignée.

L'invention s'applique à différents types d'ustensiles de cuisine, tels que des casseroles, des poêles, des plats, etc.

## Revendications

1. Poignée amovible pour ustensile de cuisine, apte à coopérer avec une embase de l'ustensile, **caractérisée en ce que** la poignée (10) loge un aimant mobile (44) apte à être entraîné en rotation autour d'un axe de rotation (XX) s'étendant sensiblement dans la direction longitudinale de la poignée, les pôles (N, S) de l'aimant mobile (44) étant disposés radialement de part et d'autre de l'axe de rotation (XX), l'aimant mobile (44) étant prévu pour coopérer avec un aimant fixe (48) porté par l'embase (12), et un mécanisme d'entraînement (54, 56) apte à entraîner l'aimant mobile (44) de l'une à l'autre de deux positions comprenant une position de verrouillage dans laquelle les pôles (N, S) de l'aimant mobile (44) et les pôles (N', S') de l'aimant fixe (48) s'attirent et une position de déverrouillage dans laquelle les pôles (N, S) de l'aimant mobile (44) et les pôles (N', S') de l'aimant fixe (48) se repoussent, ainsi qu'un crochet de verrouillage (74) actionné au moins en partie par la rotation de l'aimant mobile (44) et apte à être placé dans l'une ou l'autre de deux positions comprenant une position de verrouillage dans laquelle le crochet de verrouillage est prévu pour s'engager dans l'embase et une position de déverrouillage dans laquelle le crochet de verrouillage est prévu pour se dégager de l'embase.

2. Poignée amovible selon la revendication 1, comprenant un corps (16) de forme oblongue logeant l'aimant mobile (44) et le mécanisme d'entraînement (54, 56), ainsi qu'un prolongement (18) prévu pour prendre appui sous l'embase et logeant le crochet de verrouillage (74).

3. Poignée amovible selon la revendication 2, dans laquelle l'aimant mobile (44) est disposé derrière une paroi frontale (32) de la poignée prévue pour venir en butée contre une paroi frontale (34) de l'embase et se raccordant avec une paroi supérieure (36) du prolongement (18) prévue pour venir en appui sous une paroi inférieure (38) de l'embase, et dans laquelle débouche une cavité logeant le crochet de verrouillage (74).

4. Poignée amovible selon l'une des revendications 1 à 3, dans laquelle l'aimant mobile (44) est porté par un barillet (46) de forme générale cylindrique, monté en rotation dans la poignée et couplé au mécanisme d'entraînement (54, 56), le barillet formant une came périphérique (84) apte à coopérer avec une butée (86) du crochet de verrouillage (74) pour le déplacer de l'une à l'autre de sa position de verrouillage et de sa position de déverrouillage.

5. Poignée amovible selon l'une des revendications 1 à 4, dans laquelle l'aimant mobile (44) est apte à tourner sur un intervalle angulaire d'au moins 90° pour se déplacer de l'une à l'autre de sa position de verrouillage et de sa position de déverrouillage.

6. Poignée amovible selon l'une des revendications 1 à 5, dans laquelle le crochet de verrouillage (74) est soumis à l'action d'un ressort (78) tendant à déplacer ledit crochet de verrouillage vers la position de verrouillage dans laquelle il fait saillie de la poignée et est prévu pour s'engager dans l'embase, le crochet de verrouillage étant apte à être déplacé vers la position de déverrouillage dans laquelle il est au moins en partie escamoté dans la poignée.

7. Poignée amovible selon l'une des revendications 1 à 6, dans laquelle le crochet de verrouillage (74) comporte une face inclinée (80) prévue pour coopérer avec l'embase lors de la mise en place de la poignée sur l'embase pour amener le crochet de verrouillage en position de déverrouillage, puis en position de verrouillage.

8. Poignée amovible selon l'une des revendications 1 à 7, dans laquelle le mécanisme d'entraînement comprend une tige d'entraînement (54) s'étendant sensiblement dans la direction longitudinale de la poignée et couplée en rotation à l'aimant mobile (44).

9. Poignée amovible selon la revendication 8, dans laquelle la tige d'entraînement (54) est couplée en rotation à l'aimant mobile (44) par l'intermédiaire d'un accouplement universel (56), en sorte que l'axe de rotation (XX) de l'aimant mobile (44) soit incliné angulairement par rapport à l'axe de rotation de la tige d'entraînement.

10. Poignée amovible selon l'une des revendications 1 à 9, dans laquelle le mécanisme d'entraînement (54, 56) est couplé à un curseur (58) rappelé vers une première position correspondant à la position de verrouillage de l'aimant mobile et susceptible d'être déplacé manuellement vers une seconde position correspondant à la position de déverrouillage de l'aimant mobile.

11. Poignée amovible selon la revendication 10, prise en combinaison avec la revendication 8, dans laquelle le mécanisme d'entraînement comprend une crémaillère (62) solidaire du curseur (58) qui engrène avec un pignon droit (64) solidaire en rotation d'un pignon de renvoi (68) qui engrène avec un pignon de renvoi (70) solidaire en rotation de la tige d'entraînement (54).

12. Poignée amovible selon l'une des revendications 1 à 11, dans laquelle la poignée est munie d'au moins une tige de guidage (40) s'étendant sensiblement dans la direction longitudinale de la poignée et prévue pour s'engager dans l'embase (12) afin d'assurer un guidage en translation pour l'emmanchement de la poignée sur l'embase.

13. Ustensile de cuisine comprenant une embase (12) prévue pour recevoir une poignée amovible, **caractérisé en ce que** l'embase loge un aimant fixe (48) dont les pôles respectifs (N', S') sont disposés de part et d'autre un axe définissant un axe d'emmanchement de la poignée et en ce l'embase comporte un évidement (82) prévu pour recevoir un crochet de verrouillage de la poignée.

14. Ustensile de cuisine selon la revendication 13, dans lequel l'embase (12) comprend une paroi frontale (34) prévue pour venir en butée contre une paroi frontale de la poignée et se raccordant avec une paroi inférieure (38) prévue pour venir en appui sur une paroi supérieure de l'embase.

15. Ustensile de cuisine selon la revendication 14, dans lequel l'aimant fixe (48) est disposé derrière la paroi frontale (34) de l'embase et l'évidement (82) débouche dans la paroi inférieure (38) de l'embase ().

16. Ustensile de cuisine selon l'une des revendications 13 à 15, dans lequel l'embase comprend au moins un logement (42) prévu pour recevoir une tige de guidage (40) de la poignée afin d'assurer un guidage en translation pour l'emmanchement de la poignée sur l'embase.

17. Dispositif de préhension comprenant une poignée amovible selon l'une des revendications 1 à 12 et un ustensile de cuisine selon l'une des revendications 13 à 16.

## Patentansprüche

1. Abnehmbarer Griff für ein Küchengerät, der in der Lage ist, mit einem Unterteil des Geräts zusammenzuwirken, **dadurch gekennzeichnet, dass** der Griff (10) einen beweglichen Magneten (44) aufnimmt, der in der Lage ist, in Drehung um eine Drehachse (XX) angetrieben zu werden, die sich im Wesentlichen in der Längsrichtung des Griffs erstreckt, wobei die Pole (N, S) des beweglichen Magneten (44) radial beiderseits der Drehachse (XX) angeordnet sind, wobei der bewegliche Magnet (44) vorgesehen ist, um mit einem festen Magneten (48), der von dem Unterteil (12) getragen wird, zusammenzuwirken, und einen Antriebsmechanismus (54, 56) aufnimmt, der in der Lage ist, den beweglichen Magneten (44) von der einen in die andere der beiden Positionen anzutreiben, umfassend eine Verriegelungsposition, in der die Pole (N, S) des beweglichen Magneten (44) und die Pole (N', S') des festen Magneten (48) sich anziehen und eine Entriegelungsposition, in der die Pole (N, S) des beweglichen Magneten (44) und die Pole (N', S') des festen Magneten (48) sich voneinander abstoßen, sowie einen Verriegelungshaken (74) aufnimmt, der wenigstens teilweise durch die Drehung des beweglichen Magneten (44) betätigt wird und in der Lage ist, in die eine oder die andere der beiden Positionen gesetzt zu werden, umfassend eine Verriegelungsposition, in der der Verriegelungshaken vorgesehen ist, in das Unterteil einzugreifen und eine Entriegelungsposition, in der der Verriegelungshaken vorgesehen ist, das Unterteil freizugeben.

2. Abnehmbarer Griff nach Anspruch 1, mit einem Körper (16) von länglicher Form, der den beweglichen Magneten (44) und den Antriebsmechanismus (54, 56) sowie eine Verlängerung (18) aufnimmt, die vorgesehen ist, um sich auf dem Unterteil abzustützen und den Verriegelungshaken (74) aufzunehmen.

3. Abnehmbarer Griff nach Anspruch 2, bei dem der bewegliche Magnet (44) hinter einer Vorderwand (32) des Griffs angeordnet ist, die vorgesehen ist, um in Anschlag gegen eine Vorderwand (34) des Unterteils zu kommen und sich mit einer oberen Wand (36) der Verlängerung (18) verbindet, die vorgesehen ist, um unter eine untere Wand (38) des Unterteils zu drücken, und in der ein Hohlraum mündet, der den Verriegelungshaken (74) aufnimmt.

4. Abnehmbarer Griff nach einem der Ansprüche 1 bis 3, bei dem der bewegliche Magnet (44) durch eine Trommel (46) von allgemeiner Zylinderform getragen wird, drehbeweglich angebracht in dem Griff und gekoppelt mit dem Antriebsmechanismus (54, 56), wobei die Trommel einen Umfangsnocken (48) bildet, der geeignet ist, mit einem Anschlag (46) des Verriegelungshakens (74) zusammenzuwirken, um ihn von der einen in die andere seiner Verriegelungsposition und seiner Entriegelungsposition zu bewegen.

5. Entfernbarer Griff nach einem der Ansprüche 1 bis 4, bei dem der bewegliche Magnet (44) geeignet ist, über einen Winkelabstand von wenigstens 90° zu drehen, um sich von der einen zur anderen seiner Verriegelungs- und Entriegelungspositionen zu bewegen.

6. Abnehmbarer Griff nach einem der Ansprüche 1 bis 5, bei der der Verriegelungshaken (74) der Einwirkung einer Feder (78) unterworfen ist, die dazu drängt, den Verriegelungshaken in die Verriegelungsposition zu bewegen, in der er von dem Griff vorspringt und vorgesehen ist, in das Unterteil einzugreifen, wobei der Verriegelungshaken in der Lage ist, in die Entriegelungsposition verschoben zu werden, in der er wenigstens teilweise in dem Griff eingefahren ist.

7. Abnehmbarer Griff nach einem der Ansprüche 1 bis 6, bei dem der Verriegelungshaken (74) eine geneigte Fläche (80) aufweist, die vorgesehen ist, um mit dem Unterteil beim Vorortsetzen des Griffs an das Unterteil zusammenzuwirken, um den Verriegelungshaken in Entriegelungsposition sodann in Verriegelungsposition zu bringen.

8. Abnehmbarer Griff nach einem der Ansprüche 1 bis 7, bei dem der Antriebsmechanismus eine Antriebsstange (54) aufweist, die sich im Wesentlichen in der Längsrichtung des Griffs erstreckt, und beim Drehen mit dem beweglichen Magneten (44) gekoppelt ist.

9. Abnehmbarer Griff nach Anspruch 8, bei dem die Antriebsstange (54) in Drehung mit dem beweglichen Magneten (44) mittels einer Universalkupplung (56) gekoppelt ist, derart, dass die Drehachse (XX) des beweglichen Magneten (44) winkelmäßig bezüglich der Drehachse der Antriebsstange geneigt ist.

10. Abnehmbarer Griff nach einem der Ansprüche 1 bis 9, bei dem der Antriebsmechanismus (54, 56) mit einem Schieber (58) gekoppelt ist, der in eine erste Position, entsprechend der Verriegelungsposition des beweglichen Magneten zurückgesetzt ist, und in der Lage ist, manuell in eine zweite Position verschoben zu werden, die der Entriegelungsposition des beweglichen Magneten entspricht.

11. Abnehmbarer Griff nach Anspruch 10 in Kombination mit Anspruch 8, bei dem der Antriebsmechanismus eine mit dem Schieber (58) verbundene Zahnstange (62) aufweist, die in Eingriff steht mit einem geraden Ritzel (64), das drehverbunden ist mit einem Rücksetzritzel (68), das in Eingriff steht mit einem Rücksetzritzel (70), das drehverbunden ist mit der Antriebsstange (54).

12. Abnehmbarer Griff nach einem der Ansprüche 1 bis 11, bei dem der Griff mit wenigstens einer Führungsstange (40) versehen ist, die sich im Wesentlichen in die Längsrichtung des Griffs erstreckt und vorgesehen ist, um in Eingriff zu kommen mit dem Unterteil (12), um eine Translationsführung für das Einsetzen des Griffs in das Unterteil sicherzustellen.

13. Küchengerät mit einem Unterteil (12), das vorgesehen ist, um einen abnehmbaren Griff aufzunehmen, **dadurch gekennzeichnet, dass** das Unterteil einen festen Magneten (48) aufnimmt, dessen entsprechende Pole (N', S') beiderseits einer Achse angeordnet sind, die eine Einsetzachse des Griffs definiert und dass das Unterteil eine Ausnehmung (82) aufweist, die vorgesehen ist, um einen Verriegelungshaken des Griffs aufzunehmen.

14. Küchengerät nach Anspruch 13, bei dem das Unterteil (12) eine Vorderwand (34) aufweist, die vorgesehen ist, um in Anschlag gegen eine Vorderwand des Griffs zu kommen, und sich mit einer unteren Wand (38) verbindet, um in Anlage an eine obere Wand des Unterteils zu kommen.

15. Küchengerät nach Anspruch 14, bei dem der feste Magnet (48) hinter der Vorderwand (34) des Unterteils angeordnet ist und die Ausnehmung (82) in der unteren Wand (38) des Unterteils (12) mündet.

16. Küchengerät nach einem der Ansprüche 13 bis 15, bei dem das Unterteil wenigstens eine Aufnahme (42) aufweist, die vorgesehen ist, um eine Führungsstange (40) des Griffs aufzunehmen, um eine Translationsführung für das Einsetzen des Griffs in das Unterteil sicherzustellen.

17. Greifvorrichtung mit einem abnehmbaren Griff nach einem der Ansprüche 1 bis 12 und einem Küchengerät nach einem der Ansprüche 13 bis 16.

## Claims

1. Removable handle for kitchen utensil, adapted to cooperate with a base on the utensil, **characterised in that** the handle (10) houses a movable magnet (44) adapted to be rotationally driven about a rotation axis (XX) extending substantially in the longitudinal direction of the handle, the poles (N, S) of the movable magnet (44) being arranged radially on either side of the rotation axis (XX), the movable magnet being intended to cooperate with a fixed magnet (48) carried by the base (12), and a drive mechanism (54, 56) adapted to drive the movable magnet (44) from one to the other of two positions comprising a locking position in which the poles (N, S) of the movable magnet (44) and the poles (N', S') of the fixed magnet attract one another and an unlocking position in which the poles (N, S) of the movable magnet (44) and the poles (N', S') of the fixed magnet (48) repel one another, as well as a locking hook (74) at least partly actuated by the rotation of the movable magnet (44) and adapted to be placed in one or other of two positions comprising a locking position in which the locking hook is intended to engage in the base and an unlocking position in which the locking hook is intended to disengage from the base.

2. Removable handle according to claim 1, comprising an elongate body (16) housing the movable magnet (44) and the drive mechanism (54, 56), and an extension (18) intended to be supported under the base and accommodating the locking hook (74).

3. Removable handle according to claim 2, wherein the movable magnet (44) is arranged behind a front wall (32) of the handle intended to abut on a front wall (34) of the base and connected to a top wall (36) of the extension (18) intended to be supported under a bottom wall (38) of the base, and into which a cavity housing the locking hook (74) opens.

4. Removable handle according to one of claims 1 to 3, wherein the movable magnet (44) is carried by a barrel (46) of generally cylindrical shape, rotatably mounted in the handle and coupled to the drive mechanism (54, 56), the barrel forming a peripheral cam (84) adapted to cooperate with an abutment (86) of the locking hook (74) to move it from one to the other of its locking position and its unlocking position.

5. Removable handle according to one of claims 1 to 4, wherein the movable magnet (44) is adapted to rotate through an angular interval of at least 90° to move from one to the other of its locking position and its unlocking position.

6. Removable handle according to one of claims 1 to 5, wherein the locking hook (74) is subjected to the action of a spring (78) biasing the locking hook towards the locking position in which it projects from the handle and is intended to engage in the base, the locking hook being adapted to be moved towards the locking position in which it is at least partly retracted into the handle.

7. Removable handle according to one of claims 1 to 6, wherein the locking hook (74) comprises an inclined surface (80) intended to cooperate with the base during the positioning of the handle on the base to bring the locking hook into the unlocking position, then into the locking position.

8. Removable handle according to one of claims 1 to 7, wherein the drive mechanism comprises a drive rod (54) extending substantially in the longitudinal direction of the handle and rotationally coupled to the movable magnet (44).

9. Removable handle according to claim 8, wherein the drive rod (54) is rotationally coupled to the movable magnet (44) via a universal coupling (56), so that the rotation axis (XX) of the movable magnet (44) is angularly inclined relative to the rotation axis of the drive rod.

10. Removable handle according to one of claims 1 to 9, wherein the drive mechanism (54, 56) is coupled to a slider (58) moved towards a first position corresponding to the locking position of the movable magnet and adapted to be moved manually towards a second position corresponding to the unlocking position of the movable magnet.

11. Removable handle according to claim 10, in conjunction with claim 8, wherein the drive mechanism comprises a rack (62) attached to the slider (58) which meshes with a spur gear (64) attached for rotation with an idler gear (68) which meshes with an idler gear (70) attached for rotation with the drive rod (54).

12. Removable handle according to one of claims 1 to 11, wherein the handle is provided with at least one guide rod (40) extending substantially in the longitudinal direction of the handle and intended to engage in the base (12) in order to ensure translational guiding for fitting the handle onto the base.

13. Kitchen utensil comprising a base (12) intended to receive a removable handle, **characterised in that** the base houses a fixed magnet (48) the respective poles (N', S') of which are arranged on either side of an axis defining an axis of fitting of the handle, and **in that** the base comprises a recess (82) intended to receive a locking hook for the handle.

14. Kitchen utensil according to claim 13, wherein the base (12) comprises a front wall (34) intended to abut on a front wall of the handle and connected to a bottom wall (38) intended to abut on a top wall of the base.

15. Kitchen utensil according to claim 14, wherein the fixed magnet (48) is arranged behind the front wall (34) of the base and the recess (82) opens into the bottom wall (38) of the base ().

16. Kitchen utensil according to one of claims 13 to 15, wherein the base comprises at least one recess (42) intended to accommodate a guide rod (40) of the handle in order to ensure translational guiding for fitting the handle onto the base.

17. Gripping device comprising a removable handle according to one of claims 1 to 12 and a kitchen utensil according to one of claims 13 to 16.
